Europäisches Patentamt

European Patent Office

Office européen des brevets

(11) Veröffentlichungsnummer: **0 189 184**
A2

# (12) EUROPÄISCHE PATENTANMELDUNG

(21) Anmeldenummer: 86100804.3

(22) Anmeldetag: 22.01.86

(51) Int. Cl.⁴: **A 61 C 5/08**

(30) Priorität: 09.02.85 DE 3504472
23.01.85 DE 3502091
25.06.85 DE 3522663
04.06.85 DE 3520049

(43) Veröffentlichungstag der Anmeldung: 30.07.86
Patentblatt 86/31

(84) Benannte Vertragsstaaten: AT BE CH DE FR GB IT LI NL SE

(71) Anmelder: Neumeyer, Stefan Dr., Leminger Strasse 10, D-8491 Eschlkam (DE)

(72) Erfinder: Neumeyer, Stefan Dr., Leminger Strasse 10, D-8491 Eschlkam (DE)

(74) Vertreter: Wasmeier, Alfons, Dipl.-Ing. et al, Patentanwälte Dipl.-Ing. A.Wasmeier Dipl.-Ing. H.Graf Postfach 382 Greflinger Strasse 7, D-8400 Regensburg 1 (DE)

(54) Dental-Retentionstift.

(57) Ein Dental-Retentionsstift, der vorzugsweise als Metallstift ausgebildet ist, erhält einen geschlossenen, zylindrischen Überzug aus einem Haftvermittler, wahlweise einer zusätzlichen Opakerschicht und wahlweise einer zusätzlichen Schicht aus einem Kunststoff-Füllungsmaterial, um eine physikalisch chemische bzw. rein chemische Verbindung zwischen dem Retentionsstift und dem Füllungsaufbau zu erzielen und damit eine wesentlich höhere Retentionskraft zu erzielen als mit herkömmlichen Metallstiften, die mit dem Füllungsaufbau lediglich eine mechanische bzw. mechanisch-physikalische Verbindung ergeben. Die Retentionskraft wird dadurch erhöht, dass der Haftvermittler bzw. die auf diesen aufgebrachte äussere Kunststoffschicht auf den Stift aufschrumpft und sich ringförmig verspannt. Des weiteren werden Beispiele für die Ausgestaltung eines Retentionsstiftes angegeben, die dem Zahnarzt die Handhabung und das Einsetzen derartiger Retentionsstifte entscheidend erleichtern.

# Dental-Retentionstift

Die Erfindung bezieht sich auf Dental-Retentionsstifte mit einem in die Zahnhartsubstanz einzusetzenden bzw. einzuschraubenden ersten Abschnitt und einem mit in den Füllungsaufbau vorstehenden und dessen Retention zum Zahn verstärkenden zweiten Abschnitt.

Dental-Retentionsstifte werden in der Technik der Zahnrestaurierung verwendet, um für den Füllungsaufbau in der gesunden Zahnhartsubstanz eine Haupt- oder Zusatzretention zu erreichen. Dabei wird der Stift mit einem Abschnitt in eine Bohrung in der Zahnhartsubstanz so eingesetzt, vorzugsweise eingeschraubt, daß der andere Abschnitt aus der Zahnhartsubstanz vorsteht und um ihn herum die Füllung aufgebaut werden kann. Metallstifte gehen dabei mit dem Füllungsaufbau eine mechanische Verbindung ein, wobei der dem Füllungsaufbau zugeordnete Teil des Stiftes zur Verbesserung dieser mechanischen Verbindung mit dem Füllungsmaterial z.B. schraubenförmig oder in sonstiger Weise mit vorspringenden und zurückspringenden Verformungen, Hinterschneidungen oder dergl. makroskopischen Formen versehen ist, damit die Füllmasse, insbes. bei Zug- und Druckbeanspruchungen, sich nicht vom Stift lösen kann. Da aber auf die Füllungsmasse beim Kauen erhebliche Beanspruchungen, z.B. in Form von Zug- und Druckkräften, ausgeübt werden, reicht eine derartige mechanische Verbindung für einen exakten Körperschluß zwischen Stift und Füllungsaufbau im allgemeinen nicht aus. Zwischen Füllungsmaterial und Stift besteht hierbei ein Randspalt. Stellen, an denen der Stift mit der Füllmasse nicht fest und vollflächig anliegt, sind jedoch Schwachstellen, die nicht zur Festigkeit und Haltbarkeit der Füllung bzw. der Verbindung der Füllung mit der Zahnhartsubstanz beitragen und es kommt zu einer frühzeitigeren Alterung des Kunststoffes oder des Füllungsmaterials in diesem Bereich. Aufgrund der Alterung des Kunststoffes wird die Retention des Stiftes vor allem bei Kunststoffmaterialien immer geringer. Deshalb ist diese Methode, die bisher in weitem Umfang angewendet wird, nicht zufriedenstellend. Als Füllungsmaterialien werden heute vorwiegend
Amalgame, Kunststoffüllungsmaterialien und Glasionomerzemente verwendet. Eine diese genannten Nachteile ausschließende
chemische Verbindung läßt sich bisher nur erzielen, wenn mit
Gold oder Silber überzogene Stifte verwendet und wenn als
Füllungsmaterial Amalgame angewendet werden. Da jedoch
Amalgamfüllungen in der Zahnheilkunde in Zukunft von anderen
Füllungsmaterialien verdrängt werden sollen und somit
Kunststoffüllungsmaterialien und Glasionomerzemente neben
dem bisherigen Haupteinsatzgebiet im Frontzahnbereich nun
auch im Seitenzahnbereich immer mehr verwendet werden, ist
die oben genannte Methode von immer geringer werdender
Bedeutung, so daß heutzutage die Verbindung zwischen einem
Retentionsstift aus Metall oder anderem Material und der
Füllungsmasse aus Kunststoff oder Glasionomerzement oder
anderen nichtmetallischen Materialien in der Regel eine rein
mechanische Verbindung ergibt.

Eine derartige rein mechanische Verbindung hat gegenüber
einer rein chemischen bzw. physikalisch-chemischen oder
einer physikalisch-chemisch-mechanischen Verbindung entscheidende Nachteile, da bei der rein mechanischen Verbindung Mikrorandspalte auftreten, die minimale Relativbewegungen zwischen Stift und Füllungsmasse zulassen. Diese
Randspalte führen, da Flüssigkeit und Bakterien in sie
eintreten können, zu Korrosionserscheinungen und Alterung
der Füllungsmaterialien sowie Erleichterung der Sekundärkaries. Des weiteren kann eine Färbung des Füllungsmaterials
und ein Durchscheinen des dunklen Metallstiftes auftreten.
Schließlich und insbes. ist die Retentionskraft eines
Stiftes mit rein mechanischer Verbindung zum Füllungsmaterial erheblich geringer als eine chemische oder eine
chemisch mechanische Bindung unter Mundmilieubedingungen und
wird mit zunehmender Alterung des Kunststoffes immer
geringer, wie eingehende Untersuchungen des Erfinders
ergeben haben. Die Problematik wird noch größer, wenn
derartige Stifte für Zahnaufbauten verwendet werden und beim
Abschleifen Aufbaumaterial weggenommen werden muß, wobei dann keine ausreichende Materialstärke mehr vorhanden ist, um den Stift abzustützen und eine einwandfreie Verbindung zu gewährleisten.

Das Problem der Mikrorandspalte im Verbund Kunststoff/Metall ist in der Zahntechnik seit langem bekannt. Eine Lösung hierfür besteht in einer anorganischen Zwischenschicht als Haftvermittlerschicht, die eine chemische Verbindung zur Unterlage und zum Kunststoff ergibt. Auf einer vorzugsweise sandgestrahlten Metalloberfläche wird z.B. eine $SiO_x$-C-Schicht, darüber eine Haftvermittlerschicht, z.B. Silanhaftvermittler, und darüber eine Kunststoffschicht aufgebracht. Der Haftvermittler stellt die chemische Haftvermittlung zwischen dem Kunststoff und der $SiO_x$-C-Schicht dar. Die Verwendung eines derartigen Kunststoff-Metall-Verbundes in der Zahntechnik ist bisher ausschließlich für größere, weitgehend ebene Flächen verwendet worden, und zwar in Verbindung mit Kronengerüsten und Brückengerüsten im Kronenbereich, um eine Metallfläche mit Kunststoff zu verblenden. Dabei hat die Haftfläche stets einen verhältnismäßig großen Flächeninhalt, um die hohen Kaukräfte aufzunehmen, und der Kunststoff stellt die äußerste, d.h. die Sichtfläche des fertigen Zahnes dar. Dieser Kunststoff muß gleichzeitig die Anforderungen an eine hohe Oberflächengüte (Polierbarkeit, Dichtigkeit, etc.) erfüllen.

Aufgabe der Erfindung ist es, Dental-Retentionsstifte der gattungsgemäßen Art so auszugestalten, daß eine einwandfreie physikalisch-chemische bzw. rein chemische Verbindung zwischen der Stiftoberfläche und dem Füllungsaufbau zusätzlich und unabhängig oder abhängig von der mechanischen Verbindung erzielt werden kann, daß damit die Festigkeit der Verbindung zwischen Stift und Füllungsmaterial wesentlich erhöht und als Folge davon die wirksame Verbindungsfläche wesentlich kleiner gehalten werden kann, daß das Auftreten von Mikrorandspalten wirksam verhindert wird, und daß die durch die bisher bestandene Perkulation zwischen Füllungsmaterial und Metall verursachte, frühzeitige Alterung des Füllungsmateriales reduziert wird. Des weiteren ist Aufgabe der Erfindung, einen Dental-Retentionsstift mechanisch so auszugestalten, daß sein Einsetzen in den zu restaurierenden Zahn auf besonders einfache und zweckmäßige Weise möglich ist.

Gemäß der Erfindung wird diese Aufgabe dadurch gelöst, daß der Retentionsstift zur Erhöhung der Retentionskraft (zumindest auf seinem dem Füllungsaufbau zugeordneten Abschnitt) einen ringförmig geschlossenen, insgesamt zylindrischen oder becherförmigen Überzug aufweist, der aus mindestens einer mit dem Material des Stiftes und dem Material des Füllungsaufbaues eine physikalisch-chemische oder rein chemische Verbindung eingehenden, auf den Stift aufgebrachten, mundmilieubeständigen Haftvermittlerschicht besteht.

Grundsätzlich betrifft die Erfindung zwei verschiedene Arten von Retentionsstiften. Im einen Fall wird der Retentionsstift dem Zahnarzt fertig mit Überzug versehen angeboten, so daß der Zahnarzt den Stift in den Zahn des Patienten einsetzt und die Füllung um den Stift herum aufbaut. Im anderen Fall wird der Stift mechanisch vorbehandelt, aber ohne Überzug versehen, dem Zahnarzt zusammen mit der Überzugsmasse zur Verfügung gestellt, der Zahnarzt setzt den Stift ohne Überzug in den Zahn ein, bringt die bereitgestellte Überzugsmasse selbst auf den Stift auf und baut anschließend die Füllung auf dem Zahn über dem Stift auf. Nachstehend wird in der Regel auf den fertig bereitgestellten Stift bezug genommen, der zur industriellen Herstellung bevorzugt wird.

Mit einem zylindrischen Überzug nach der Erfindung auf dem Retentionsstift wird erreicht, daß die Retentionskräfte von Metall zu Kunststoff über Haftvermittlerschichten im Vergleich zu vorwiegend ebenen, relativ großen Flächen um ein Mehrfaches vergrößert werden, und zwar von etwa 10 - 20 $N/mm^2$ auf ca. 50 - 70 $N/mm^2$. Dies wird dadurch erreicht, daß um die ringförmig ausgebildete, z.B. durch Aufrauhen mikroretentiv gemachte Oberfläche, die bei der Polymerisation der derzeitigen Kunststoff- und Glasionomermaterialien auftretenden Schrumpfungen durch den Haftvermittler sich als sehr starke Verspannungen auswirken können und so zu diesen hohen Retentionswerten von 50 - 70 N/mm$^2$ Stiftoberfläche führen. Hierbei verwendete Kunststoffe sind z.B. ADAPTIC, DURAFILL, PMMA-Kunststoffe, BIS-GMA-Kunststoffe, Polyurethanstoffe und dergl., die mit dem Füllungsaufbau eine chemische Verbindung eingehen. Der Schrumpfungsvorgang tritt dabei entweder im Füllungsmaterial selbst oder in einer der auf den Stift aufgebrachten Haftvermittlerschichten auf. Bei den derzeit verfügbaren Haftvermittlern und Füllungsmaterialien, Kunststoffen bzw. Glasionomerzementen ist dieser Prozeß entscheidend, da dadurch die Retentionskräfte außergewöhnlich erhöht werden können. Theoretisch liegen die Bindungsenergien von physikalischen bzw. chemischen Bindungsmechanismen sehr hoch, lassen sich aber in der Praxis nicht erzielen. Je höher die Festigkeit der chemischen Verbindung erreicht werden kann, desto weniger entscheidend ist die zusätzliche Retention durch den Schrumpfungsvorgang. Von ausschlaggebender Bedeutung ist selbst im Falle einer außergewöhnlichen Verbesserung der chemischen Haftvermittler in der Praxis die ringfömige Ausbildung des Überzuges, da nur durch sie gewährleistet ist, daß der Stift die in allen Richtungen bei Belastung, z.B. beim Kauen, auftretenden Druck-, Zug-, Rotations- und Scherkräfte vollflächig über seine Mantelfläche aufnehmen kann und somit im Vergleich zu mechanischen Systemen seine Aufgabe zur Füllungsverankerung qualitativ und quantitativ besser erfüllen kann. Diese ringförmige bzw. zylindrische Anordnung gewinnt noch mehr an Bedeutung, wenn die Stifte zur Restauration tief zerstörter Zähne mit anschließendem Substanzabtrag, z.B. Beschleifen für die Aufnahme einer Krone, verwendet werden. Hier führt zu starker Substanzabtrag dazu, daß das Material um den Stift mit mechanischer Verankerung an manchen Stellen zu schwach für die Aufnahme von Druckkräften wird, so daß der Stift seine retentive Aufgabe bei bestimmten Belastungsrichtungen nicht mehr erfüllen kann. Bei Anwendung der Haftungsprinzipien nach vorliegender Erfindung wird hingegen die der Kraft entgegengesetzte Fläche des Stiftes auf Zug mitbeansprucht und somit als Retention wirksam.

Die Retentionskräfte von Stiften mit physikalisch-chemischem bzw. rein chemischem Verbund liegen, wie eingehende Untersuchungen des Erfinders ergeben haben, erheblich über denen mechanischer Retentionssysteme mit Gewinde, so daß auf zusätzliche makroskopische Retentionen in Form von Ausstulpungen, Hinterschneidungen oder dergl. im wesentlichen verzichtet werden kann. Werden dennoch Stiftformen verwendet, die von der zylindrischen Form mit Mikroretentionen abweichen, dienen solche Formen vor allem dazu, die für die jeweiligen Restaurationsformen charakteristischen, im Füllungsmaterial auftretenden Spitzenspannungen zu vermeiden.

Der Überzug der Retentionsstifte gemäß der Erfindung kann in unterschiedlicher Weise aufgebaut sein. Es ist hierbei entscheidend, daß der Überzug die gesamte Mantelfläche des Stiftes vollständig umschließt, so daß ein in Umfangsrichtung zusammenhängender Überzug entsteht. Grundsätzlich bezieht sich die Erfindung bei Retentionsstiften mit fertig aufgebrachtem Überzug auf folgende Ausführungsformen:

1. Auf den Retentionsstift ist eine Siliziumoxyd-Kohlenstoff-Schicht aufgebracht, z.B. nach dem Silicoater-Verfahren. Diese Schicht ergibt mit der Oberfläche des Stiftes, der vorzugsweise aus Metall besteht und dessen Umfangsfläche, z.B. durch Sandstrahlen, aufgerauht ist, eine innige adhäsive bzw. physikalische Verbindung. Auf diese $SiO_x$-C-Schicht wird ein Silan-Haftvermittler aufgetragen, der eine chemische Verbindung zum Kunststoff herstellt, welcher die äußerste Schicht des fertigen Retentionsstiftes bildet, die mit dem Material des Füllungsaufbaues eine chemische Verbindung eingeht.

2. Bei einer anderen Ausführungsform der Erfindung wird auf den aufgerauhten Retentionsstift eine Zinnoxyd-Schicht oder entsprechende Metalloxyd-Schicht aufgebracht und auf diese eine Zinnoxyd-, Titanoxyd- oder dergl. Haftvermittler-Schicht und darüber als äußerste Schicht eine Kunststoffschicht aufgetragen. Die Verbindungen zwischen den Schichten sind chemische Verbindungen. Wahlweise kann statt Zinnoxyd ein schwer lösliches Zinnsulfid bzw. analog anstelle von Titanoxyd Titansulfid verwendet werden, wobei bessere Reaktionen mit dem Haftvermittler erzielt werden können.

3. Bei einer weiteren Ausführungsform besteht der Retentionsstift aus Titan oder entsprechendem Material, das auf der Oberfläche bei Luftzutritt ein Titanoxyd oder dergl. bildet oder aber dieses Oxyd durch ein spezielles Verfahren entstehen läßt. Auf dieses Titanoxyd wird ein Haftvermittler aufgetragen und darauf der Kunststoff aufgebracht. Anstelle von Titan können auch andere Metalle oder deren Legierungen als Material für den Retentionsstift verwendet werden, deren Oberfläche oxydiert und die gewebeverträglich sowie in Legierung nicht korrosiv sind. Auch Metallegierungen, z.B. eine Ti-Va-Al-Legierung, ist anwendbar. Beispiele für einen derartig verwendbaren Haftvermittler sind Titanate oder das 4-Meta-Opak-Resin (das bereits den Opaker enthält).

4. Bei einer weiteren Variante wird auf den Retentionsstift Porzellanmasse aufgebracht, darüber eine geeignete Haftvermittlerschicht, z.B. Silanhaftvermittler, die mit dem auf letzterer aufgebrachten Kunststoffschicht eine chemische Verbindung eingeht. Die Kunststoffschicht, die die äußerste Schicht des Retentionsstiftes bildet, ergibt eine chemische Verbindung zum Material des Füllungsaufbaues.

Grundsätzlich kann zusätzlich zu der Kunststoffschicht eine Opakerschicht auf den Retentionsstift aufgebracht werden, wobei die Opakerschicht die Farbe des fertigen Retentionsstiftes bestimmt. In aller Regel werden jedoch Opakerschicht und Kunststoffschicht als eine einzige Schicht ausgebildet und aufgetragen.

Bei Retentionsstiften, bei denen der Metallstift ohne Überzug versehen ist und der Überzug nachträglich vom Zahnarzt selbst aufgebracht wird, ergeben sich im wesentlichen folgende Möglichkeiten:

1.) Der Retentionsstift besteht aus Metall und hat eine auf seiner ganzen zylindrischen Mantelfläche aufgerauhte Porzellanoberfläche. Auf diese Oberfläche wird vom Zahnarzt vor oder nach dem Einsetzen ein geeigneter Haftervermittler, z.B. Silanhaftvermittler und darauf das Füllungsmaterial aufgebracht. Der Vorteil dieses chemischen Verbundes über die Porzellanmasse ist, daß das Porzellan bereits zahnfarben eingefärbt werden kann, daß es mundmilieubeständig, inert und hochfest ist.

2.) Auf einen Metallretentionsstift, z.B. aus Stahl, dessen Oberfläche mikroretentiv ausgebildet ist, z.B. durch Aufrauhen oder auf chemischem Wege, wird ein Metalloxyd mit einem Metall, das von dem Metall des Retentionsstiftes verschieden ist, z.B. Titanoxyd, darüber ein geeigneter Haftvermittler, z.B. im Falle von Titanoxyd Titanat, und auf diese eine Kunststoff- bzw. Opakerschicht aufgetragen.

3.) Es wird ein Metallstift verwendet, der auf seiner mikroretentiven Oberfläche eine Metalloxydschicht aufweist, deren Metall gleich dem Metall des Retentionsstiftes ist. Das Metalloxyd kann sich auf der Stiftoberfläche entweder von selbst ausbilden oder durch geeignete Verfahren ausgebildet werden. Auf die Metalloxydschicht wird wiederum ein geeigneter Haftvermittler aufgebracht, und darüber eine Kunststoff- bzw. Opakerschicht ausgebildet. Ein entsprechendes Metall ist Titan, das einen Überzug aus Titanoxyd besitzt bzw. erhält; der Haftvermittler ist dann Titanat. Anstelle der Verwendung von Metalloxyden kann es sowohl bei Beispiel 2. als auch 3. zweckmäßig sein, Metallsulfide einzusetzen.

Bei besonderen Ausführungsformen können Haftvermittler und Opaker-Kunststoffschicht als eine Schicht aufgebracht werden. Es kann jedoch von Vorteil sein, die Haftvermittlerschicht, die Opakerschicht und weitere Kunststoffschichten in getrennten Schritten bzw. Schichten aufzubringen, wenn sich dadurch bessere Retentionsergebnisse erzielen lassen. Es kann auch von Vorteil sein, die Schichten in ihrer Zusammensetzung, z.B. in bezug auf ihre Füllpartikelgröße oder dergl., unterschiedlich zu wählen, um dadurch eine Steuerung der Parameter, z.B. Temperaturempfindlichkeit, physikalische Eigenschaften, wie Dämpfung, Haftverhalten, usw. zu beeinflussen; z.B. werden Siliziumoxydpartikel als Füllpartikel verwendet.

Bei allen gemäß der Erfindung verwendeten Metallstiften ist es für die Erzielung einer einwandfreien chemischen Verbindung notwendig, die in der Regel zylindrische Mantelfläche des Stiftes vor dem Aufbringen eines Haftvermittlers auf der Oberfläche mit Mikroretentionen zu versehen, z.B. auf chemischem Wege durch Ausbilden von Poren, auf mechanischem Wege durch Sandstrahlen oder dergl. Makroskopische Formgebungen auf der Stiftoberfläche bei Retentionsstiften nach der Erfindung dienen nicht im allgemeinen der Verbesserung der Retention, sondern der Aufnahme von Spannungen im Füllungsaufbau. In einem speziellen Fall enthält die Kunststoffschicht Na-haltige Kalzium-Aluminium-Fluor-Silikat-Partikel, wodurch sich eine Verbindungsmöglichkeit zu den Glasionomerzementen des Füllungsaufbaues ergibt.

Bei Verwendung von Stiften aus unedlem Material, z.B. Titan für das Füllungsmaterial Amalgam läßt sich z.B. durch einen Gold-, Silber- oder Platinüberzug eine chemische Verbindung zum Füllungsmaterial Amalgam herstellen. Auf die Stiftoberfläche wird dabei zuerst die den Haftvermittler darstellende Edelmetallschicht aufgebracht, darüber wird eine sehr dünne Dämpfungsschicht (0,5 - 100 µm) aus Zinn, je nach den Eigenschaften des Amalgam, und darüber eine Edelmetallschicht vorgesehen, die eine direkte Verbindung zum Amalgam des Füllungsaufbaues ergibt. Bei einer Verletzung der äußeren Schicht verbindet sich die darunterliegende Schicht mit dem Füllungsmaterial, so daß die hochedle Außenschicht immer reaktionsfähig bleibt. Die äußerste Schicht des Stiftes kann auch eine Amalgam-Schicht sein, die als Schutzschicht wirkt.

Werden als Haftvermittler Kleber verwendet, z.B. Polyurethankleber, müssen diese so beschaffen sein, daß sie hydrolytisch stabil sind, daß sie zylindrisch auf den Stift aufgetragen werden und daß sie sich durch Schrumpfen um den Stift verspannen, damit eine hohe Retentionskraft erzielt wird. Der Kleberschicht kann eine undurchlässige Kunststoffschicht zugeordnet sein, die sich mit dem Kleber chemisch verbindet und die ein Eindringen von Feuchtigkeit zur inneren Stiftoberfläche unterbindet.

Nachstehend wird die Erfindung in Verbindung mit der Zeichnung anhand von Ausführungsbeispielen erläutert. Es zeigen:

Fig. 1    einen schematischen Querschnitt durch einen Dental-Retentionsstift nach der Erfindung mit auf der Stiftoberfläche aufgebrachtem Überzug,

Fig.2    einen schematischen Querschnitt durch einen Retentionsstift nach der Erfindung mit einer speziellen Ausgestaltung des unteren Abschnittes des Stiftes,

Fig. 3 - 6 schematische Querschnittsdarstellungen unterschiedlicher Ausführungsformen jeweils eines oberen Abschnittes eines Dental-Retentionsstiftes nach der Erfindung mit jeweils auf der Stiftoberfläche aufgebrachten, unterschiedlichen Überzügen,

Fig. 7    eine allgemeine Ausführungsform der Erfindung in Schnittansicht ähnlich den Figuren 1 - 6,

Fig. 8 eine schematische Querschnittsansicht längs der Linie A -A durch eine Stiftausbildung nach Fig. 7,

Fig. 9 eine Ausführungsform eines Stiftes mit schematisch dargestellter Eindrehvorrichtung am Schraubenkopf,

Fig. 10 eine weitere Ausführungsform eines Stiftes mit einer unterschiedlich ausgebildeten schematisch dargestellten Eindrehvorrichtung,

Fig. 11 in schematischer Darstellung einen Längsschnitt durch einen Retentionsstift mit Eindrehkopf und Schraubwerkzeuge,

Fig. 12 eine schematische Schnittdarstellung nach der Linie A-A,

Fig. 13 die Querschnittsansicht nach Fig. 12 in aufgespaltenem Zustand,

Fig. 14 eine weitere Ausführungsform eines Retentionsstiftes im Längsschnitt,

Fig. 15 eine schematische Darstellung einer weiteren Ausführungsform eines Eindrehwerkzeuges,

Fig. 16 eine schematische Darstellung einer weiteren Ausführungsform eines Eindrehwerkzeuges mit Retentionsstift,

Fig. 17 eine Ausführungsform eines Retentionsstiftes mit integriertem Einschraubwerkzeug,

Fig. 18 eine schematische Darstellung eines Einschraubwerkzeuges mit flexiblem Schaft,

Fig. 19 eine Detailansicht einer speziellen Ausführungsform einer Anpreßplatte eines Retentionsstiftes nach der Erfindung,

Fig. 20 eine schematische Darstellung einer speziellen Ausführungsform des in die Zahnhartsubstanz einzuschraubenden Schaftes des Retentionsstiftes,

Fig. 21 eine spezielle Ausführungsform des Schraubgewindes des Stiftschaftes, der in die Zahnhartsubstanz eingeschraubt wird, im Längsschnitt,

Fig. 22 eine Schnittdarstellung der Anordnung nach Fig. 21 längs der Linie B-B,

Fig. 23 eine Ausführungsform eines Retentionsstiftes mit makroskopischer Form des oberen Abschnittes und

Fig. 24 eine weitere, Ausführungsform eines Retentionsstiftes mit makroskopischer Form des oberen Abschittes.

Ein Retentionsstift 1 weist einen Flansch 2 auf, der beim Einsetzen als Anlage zur Zahnhartsubstanz Z dient und der den Stift 1 in einen oberen Abschnitt 3, welcher vom Füllungsaufbau S umgeben wird, und in einen unteren Abschnitt 4, der in die Zahnhartsubstanz Z eingesetzt, vorzugsweise eingeschraubt wird, teilt. Der Stift 1 ist auf seiner gesamten Oberfläche, mindestens aber auf seinem oberen Abschnitt 3 und dem Flansch 2 mit einer Haftvermittlerschicht 5, z.B. Metallkeramik bzw. Porzellanmasse, versehen. Der Retentionsstift 1 wird dem Zahnarzt zur Zahnrestaurierung in dieser Form zur Verfügung gestellt. Um die Haftvermittlerschicht 5 zwischen Herstellung und Einsatz am zu restaurierenden Zahn zu schützen, kann der Stift 1 mit einer Schutzschicht 6 versehen sein, die beispielsweise gleichzeitig der Opaker ist, oder am Ort der Herstellung in einer inerten Atmosphäre versandfertig verpackt werden, wobei die Verpackung erst unmittelbar vor der Anwendung des Stiftes durch den Zahnarzt geöffnet wird. Die Haftvermittlerschicht geht mit der schematisch mit F angedeuteten Füllmasse, die vom Zahnarzt auf die Zahnhartsubstanz und um den Retentionsstift 1 herum aufgebracht wird, eine chemische Verbindung ein, während der Metallstift 1 direkt, d.h. ohne Haftvermittlerschicht, mit dem Material des Füllungsaufbaues nicht chemisch reagieren und lediglich eine mechanische Verbindung ergeben würde.

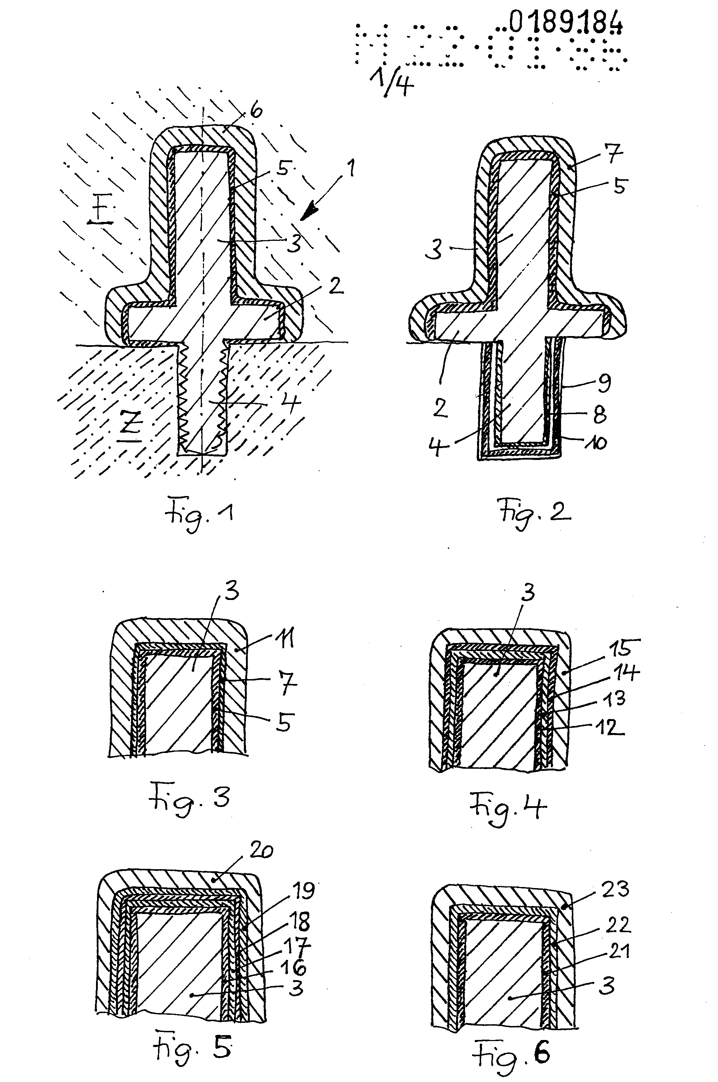

Bei der Ausführungsform nach Fig. 2 ist der obere Abschnitt 3 mit Flansch 2 des Retentionsstiftes 1 auf der äußeren Oberfläche der Haftvermittlerschicht 5 mit einer Opakerschicht 7 versehen, die eine Deckmasse ist, welche verhindert, daß bei dem fertigen, mit Überzug versehenen Retentionsstift 1 der Metallstift 3, 4 durchscheint. Mit dieser Opakerschicht 7 kann dem fertigen Retentionsstift 1 eine beliebige Farbe bzw. ein beliebiges Aussehen gegeben werden. Zugleich dient die Opakerschicht als Schutzschicht für den Haftvermittler. Bei der Darstellung nach Fig. 2 ist der untere Abschnitt 4 des Retentionsstiftes als Variante ausgebildet, die auch für andere Formen der dargestellten Figuren, unabhängig von der Ausgestaltung des Überzuges auf dem oberen Abschnitt 3 verwendet werden kann. Der Stiftteil 4 ist hierbei mit einer Metalloxydschicht 8 überzogen, während die Flächen des Bohrloches 9 in der Zahnhartsubstanz Z mit einer Glasionomerzementschicht 10 ausgekleidet sind, so daß das Glasionomerzement mit der Metalloxydschicht beim Einsetzen des Retentionsstiftes 1 in die Zahnhartsubstanz eine feste Verbindung eingeht. Der untere Abschnitt 4 kann dabei zylinderförmig ausgebildet und, wie dies bei derartigen Retentionsstiften üblicherweise der Fall ist, mit Gewindegängen versehen sein, die zusätzlich eine mechanische Verbindung des eingeschraubten Stiftes zur Zahnhartsubstanz Z ergeben. Grundsätzlich kann auf einen mit Überzug versehenen Retentionsstift nach der Erfindung eine Kunststoffhülse aufgesetzt werden, die das Überzugsmaterial schützt.

Die Ausführungsform eines Retentionsstiftes nach Fig. 3 unterscheidet sich von der nach Fig. 2 durch die auf die Opakerschicht 7 aufgebrachte Schicht 11 aus Füllungsmaterial. In Fig. 3 wie auch in den nachfolgend beschriebenen Ausführungsformen nach den Figuren 4 - 7 ist jeweils nur der obere Abschnitt 3 des Retentionsstiftes dargestellt. Das Füllungsmaterial 11 ist dabei vorzugsweise das gleiche Material wie das Füllungsmaterial des Füllungsaufbaues F, das bei dem zur Restauration in die Zahnhartsubstanz eingesetzten Retentionsstift 1 mit dem Material des Füllungsaufbaues eine chemische Verbindung eingeht. Der fertige Regentionsstift 1 ist somit in seinem aus der Zahnhartsubstanz vorstehenden Teil bereits mit einem Teil des Füllungsmaterials versehen; andererseits können das Füllungsmaterial 11 und das Material des Füllungsaufbaues F auch unterschiedliche Füllungsmaterialien sein, soweit sie eine einwandfreie und feste Verbindung miteinander ergeben, wenn der Zahnarzt die Füllung über dem Retentionsstift 1 und der Zahnhartsubstanz aufbaut.

Die Ausführungsform eines Retentionsstiftes nach Fig. 4 geht von einem Retentionsstift 1 aus, auf welchem z.B.eine Siliziumoxyd-Kohlenstoffschicht 12 aufgebracht ist, die mit einem Silanhaftvermittler 13 überzogen ist, an den sich nach außen eine Opakerschicht 14 und eine Füllungsmaterialschicht 15 als äußerste Schicht anschließen. Die Schicht 12 kann z.B. nach dem sogenannten Silicoater-Verfahren auf die Oberfläche des Metallstiftes 1 bzw. 3 aufgebracht werden. Der mit der Schicht 12 in Verbindung kommende Silanhaftvermittler 13 stellt eine feste chemische Verbindung zu der Füllungsmaterialschicht 15, die eine Kunststoffschicht ist, her, wobei die Opakerschicht 14 entweder zwischengeschaltet oder aber in die Silanhaftvermittlerschicht 13 oder in das Füllungsmaterial 15 integriert sein kann.

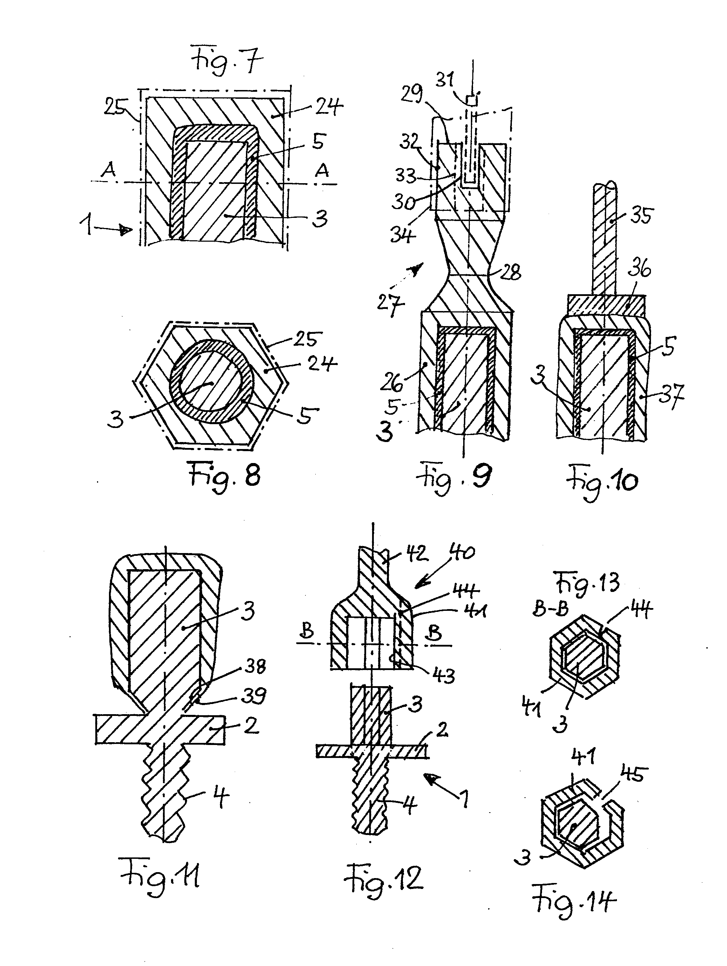

Ein Retentionsstift 1 nach Fig. 5 weist auf dem oberen Abschnitt 4 eine Zinnoxydschicht 16, eine auf die Zinnoxydschicht 16 aufgetragene Aluminiumoxydschicht (oder Siliziumoxydschicht) 17 und eine daran anschließende Haftvermittlerschicht 18 auf, an die nach außen eine weitere Haftvermittlerschicht 19 sowie eine äußerste Kunststoffschicht 20 anschließt. Die Anordnung zweier oder mehrerer Haftvermittlerschichten empfiehlt sich dann, wenn bestimmte Parameter gesteuert werden sollen, um z.B. eine bessere Haftkraft, eine Stoßdämpfung, einen Ausgleich bestimmter Parameter usw. zu erzielen. In den vorausgehenden Beispielen kann in entsprechender Weise auch eine zusätzliche Opakerschicht vorgesehen sein, die ebenfalls einschichtig oder mehrschichtig ausgebildet sein kann. Anstelle einer Zinnoxydschicht 16 und einer Aluminiumoxydschicht 17 können auch andere Schichten aus keramischem Material, Porzellan und dergl. aufgebracht, aufgebrannt, aufgeglimmt oder aufgesputtert werden, ohne daß vom Wesen der Erfindung abgewichen wird.

Bei einer weiteren Ausführungsform eines Retentionsstiftes nach Fig. 6 ist auf dem oberen Abschnitt 3 eine Zinnoxyd-schicht 21 aufgebracht, an die sich eine Haftvermittlerschicht 22 in Form eines Opaker-Verbundsystems anschließt, auf dessen äußerer Oberfläche das Füllungsmaterial 23 in Form einer Außenschicht aufgebracht wird.

Anstelle eines Metallstiftes 1 kann ein Stift aus Kunststoff, Porzellan, Keramik oder dergl. verwendet werden. Haftvermittler, Opaker und Füllungsmaterial werden bei derartigen Stiften in entsprechender Weise wie bei den Metallstiften auf die Stiftoberfläche aufgebracht, wobei die Verfahrensweise an die Besonderheiten der Stiftzusammensetzung angepaßt wird.

Die Haftvermittlerschicht kann durch eine Kleberschicht ersetzt werden, soweit eine derartige Kleberschicht den Forderungen Rechnung trägt, daß der Kleber in dem feuchten Milieu der Mundhöhle seine Klebekraft vollständig oder möglichst weitgehend beibehält. Derartige Kleber können z.B. Epoxydharzkleber, Polyurethankleber oder dergl. sein, wie sie in vielen Gebieten der Technik bekannt sind. Bei Verwendung derartiger Kleber kann es zweckmäßig sein, auf den Kleber eine undurchlässige Kunststoffschicht aufzubringen, die sich mit dem Kleber chemisch verbindet, um dadurch eine einwandfreie Abdichtung zum feuchten Milieu der Mundhöhle zu gewährleisten. Um mit derartigen Klebern die gewünschte hohe Retentionskraft zu erzielen, ist jedoch ausschlaggebend, daß der Kleber zylinderförmig um den gesamten oberen Abschnitt 3 herum aufgebracht wird und zum Stift schrumpft.

Die Figuren 7 und 8 zeigen eine allgemeine und grundsätzliche Ausführungsform eines Retentionsstiftes nach der Erfindung. Der obere Abschnitt 3 des Stiftes 1, der aus Metall, Kunststoff, Keramik oder dergl. Material hergestellt sein kann, weist nach Fig. 7 eine äußere Schicht 24 auf, die eine Schutzschicht darstellen kann, welche die darunterliegende Haftvermittlerschicht 5 oder andere zwischen Schicht 24 und Haftvermittlerschicht 5 vorhandene Schichten umschließt und welche die Kunststoffschicht ist, die die chemische Verbindung zum Füllungsaufbau darstellt. Die äußere Mantelfläche der Schutzschicht 24 ist dabei, wie in Fig. 8 gezeigt, als Kopf für den Eingriff eines Dreh- oder Schraubwerkzeuges ausgebildet, z.B. als Sechskant für die Aufnahme eines Kopfschraubenschlüssels 25 (strichpunktiert dargestellt), oder als (nicht dargestellter) Schlitz zur Aufnahme eines Schraubendrehers, mit dem der Stift in die Zahnhartsubstanz eingedreht wird.

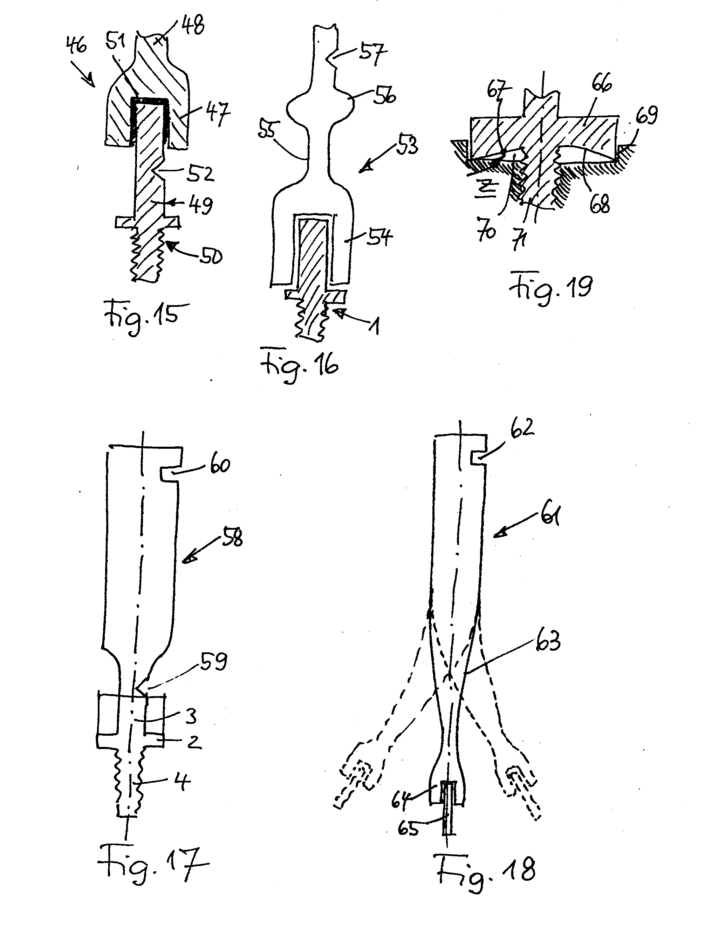

Bei der Darstellung nach Fig. 9 ist die äußerste Schicht 26 des oberen Abschnittes 3 des Überzuges des Stiftes 1 so ausgebildet, daß sie einen vom Stift 1 weg gerichteten Ansatz 27 aufweist, der ein integraler Bestandteil der Schicht 26 ist und der eine Sollbruchstelle 28 besitzt. Der Ansatz 27 weist auf seiner Stirnfläche 29 einen Schlitz 30 zur Aufnahme eines Schraubendrehers 31 oder wahlweise auf seiner Mantelfläche 32 einen Vielkant 33 zur Aufnahme eines Kopfschraubenschlüssels 34 (strichpunktiert angedeutet) oder dergl. auf. Ein Eindrehen des Stiftes mit Hilfe eines Schraubendrehers oder Kopfschraubenschlüssels wird der Stift mit seinem unteren (nicht gezeigten) Abschnitt 4 soweit in das Bohrloch 9 eingeschraubt, bis die Unterseite des Flansches 2 auf der Oberseite der vorbereiteten Zahnhartsubstanzfläche aufliegt. Bei einem weiteren Eindrehen bricht der Ansatz 27 an der Sollbruchstelle 28 vom Retentionsstift 1 ab und wird vom Zahnarzt entfernt.

Bei einer der Darstellung nach Fig. 9 ähnlichen Ausführungsform nach Fig. 10 ist der Ansatz 35, an dem ein Drehwerkzeug angesetzt wird, mit einem Träger bzw. einer Platte 36 versehen, die z.B. eine Metallplatte ist und die mit dem Ansatz 35 fest verbunden ist. Die Platte 36 ist mit der Stirnseite der äußeren Schicht 37 so verbunden, z.B. verklebt, daß nach Art einer Sollbruchstelle Ansatz 35 und Platte 36 beim Eindrehen des Retentionsstiftes in die Zahnhartsubstanz nach Erreichen des Anschlages sich von der äußeren Schicht 37 lösen, so daß der Stift im Zahn verbleibt, der Ansatz 35 und die Platte 36 jedoch gemeinsam entfernt werden können.

Fig. 11 zeigt eine Stiftform, bei der der obere Stiftabschnitt 3 am Übergang in die Anschlagplatte 2 bei 38 eine Einschnürung ausbildet und der Überzug 2 an dieser Stelle der Einschnürung folgt, damit der obere Stiftabschnitt 3 aus der Richtung der Längsachse leichter in eine gewünschte Schrägstellung gebogen werden kann. Die Einschnürung 38 kann jedoch auch entfallen, und lediglich die Einschnürung 39 der äußersten Kunststoffschicht vorgesehen sein, vorzugsweise, wenn die Kunststoffschicht einen relativ großen Durchmesser aufweist.

Die Ausführungsform nach Fig. 12 zeigt einen Retentionsstift 1 mit oberem Abschnitt und unterem Abschnitt 4. Der obere Abschnitt 4 ist als Sechskantkopf ausgebildet, wie dies in den Figuren 7 und 8 dargestellt ist. Das Werkzeug 40 ist ein Steckkopf 41 mit Schaft 42, dessen Sechskantöffnung 43 den Stiftkopf 3 bis zum Anschlagflansch 2 aufnimmt. Der Werkzeugkopf 41 weist an einer Stelle seines Mantels einen parallel zur Achsrichtung verlaufenden Schlitz 44 auf, der eine Sollbruchstelle darstellt, die beim Eindrehen des Stiftes 1 mittels Schraubwerkzeug, das am Schaft 42 angreift, bei einem entsprechenden Widerstand, z.B. wenn der Flansch 2 auf der Zahnhartsubstanz in Anlage kommt, bricht. Fig. 13 zeigt den Querschnitt B - B durch den Werkzeug- und den Stiftkopf am Beginn des Eindrehens, Fig. 14 den Werkzeugkopf nach dem Bruch. Wenn das Material des Kopfes durchtrennt ist, entsteht ein Spalt 45, das Werkzeug 41 löst sich vom Stiftkopf 3 und kann abgenommen werden.

Fig. 15 zeigt eine Ausführungsform eines Stifteindrehwerkzeuges, bei dem das Werkzeug 46, das aus Werkzeug 47 und Schaft bzw. Hülse 48 (sowie nicht dargestelltem Hand- oder Motorantrieb) besteht, auf einen verlängerten oberen Abschnitt 49 eines Stiftes 50 aufgesetzt ist und Werkzeugkopf 47 sowie oberes Ende des Abschnittes 49 fest miteinander verbunden, z.B. bei 51 zumindest über einen wesentlichen Teil der gemeinsamen Kontaktfläche verklebt sind. Der Abschnitt 49 besitzt eine Sollbruchstelle 52, an der der obere Abschnitt 49 bricht, wenn der Stift 50 einen entsprechenden Widerstand beim Einschrauben in den Zahn vorfindet. Der Teil des Abschnittes 49 oberhalb der Sollbruchstelle, der mit Werkzeugkopf und Werkzeugschaft fest verbunden ist, wird nach dem Bruch entfernt. Die Verbindung 51 kann anstelle einer Klebeverbindung auch eine Preßverbindung sein.

Fig. 16 zeigt eine Ausführungsform, bei der der Retentionsstift 1 ähnlich wie nach Fig. 12 mit einem oberen Abschnitt 3 in Form eines Kopfteiles ausgebildet ist. Das Werkzeug 53 besteht aus dem den Stiftkopf 3 umschließenden Kopf 54, einem Schaft 55 mit im Zuge des Schaftes ausgebildeter Ausweitung 56 und Sollbruchstelle 57. Wird beim Eindrehen ein entsprechender Widerstandswert erreicht, bricht der Schaft bei 57. Der auf dem Stift verbleibende Teil 53 des Werkzeuges kann dann lose vom Stift 1 abgezogen werden. Ein derartiges Werkzeug 53 ist ein Einwegwerkzeug, so daß Werkzeug 53 und Stift 1 miteinander als Einheit geliefert werden und das Werkzeug 53 nach Gebrauch weggeworfen wird.

Eine andere Ausführungsform eines entsprechenden Wegwerfwerkzeuges ist in Fig. 17 gezeigt. Hier sind Stift 1 und Werkzeug 58 als integrale Einheit ausgebildet. Das Werkzeug 58 weist eine Sollbruchstelle 59 in unmittelbarer Nähe der oberen Begrenzung des Stiftes 1 auf, an der beim Eindrehen das Werkzeug 58 vom Stift wegbricht, wenn ein entsprechender Widerstand auftritt. Fig. 17 zeigt mit 60 eine Aussparung, in die ein herkömmlicher Winkelantrieb eingesetzt wird, der die Drehbewegung mechanisch oder über Motor bewirkt.

Bei der Ausführungsform nach Fig. 18 weist das Werkzeug 61 mit seiner Aussparung 62 zur Aufnahme des Winkelstückes für den Antrieb einen Schaft 63 und einen Überwurfkopf 64 mit einer Aussparung zur Aufnahme des Retentionsstiftes 65 auf. Das Werkzeug 61 einschließlich des Überwurfkopfes 64 ist im Bereich des Schaftes 63 flexibel ausgebildet, so daß der Schaft mit dem Überwurfkopf 64 und dem darin gesicherten Stift 65 allseitig auslenkbar ist, wie dies in Fig. 18 gestrichelt angedeutet ist. Im ausgelenkten Zustand (gestrichelt) ist damit eine einwandfreie Positionierung des Werkzeuges zu einem im Winkel zur Vertikalen angeordneten Bohrloch in der Zahnhartsubstanz sichergestellt.

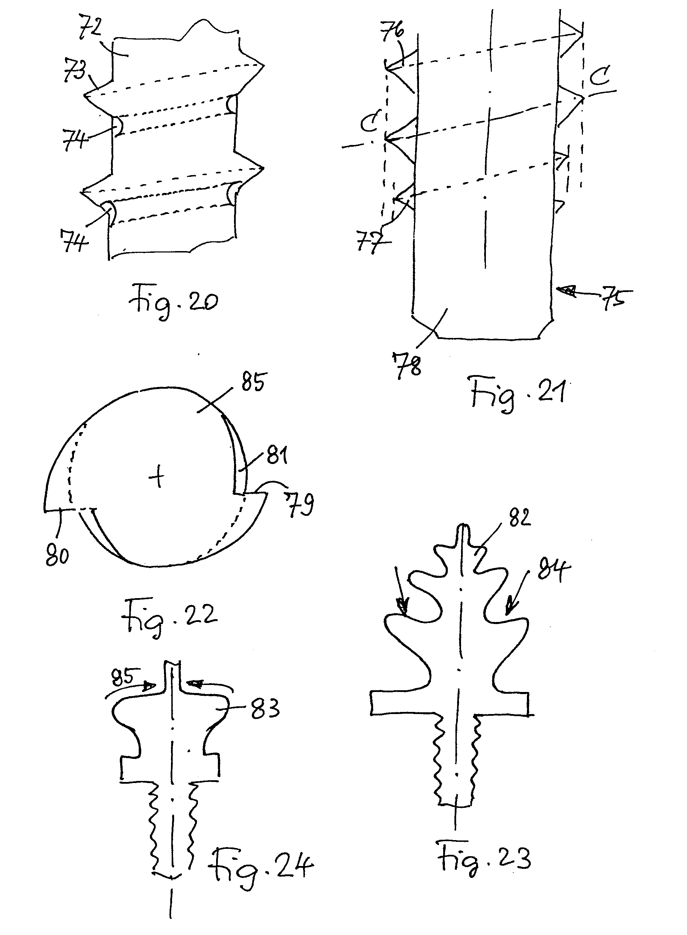

Fig. 19 zeigt eine spezielle Ausgestaltung der der Zahnhartsubstanz zugewandten Unterseite des Stiftflansches 66. Hiernach ist die Unterseite 67 nach innen und oben ansteigend ausgebildet, wobei dieser Anstieg geradlinig oder gekrümmt (mit 68 bezeichnet) verlaufen kann. Zur Aufnahme des Flansches 66 ist in der Zahnhartsubstanz eine Bohrung 69 vorgesehen, die zusammen mit der Unterseite des Flansches einen Freiraum 70 schafft. Aufgrund dieser Ausgestaltung wird die Zahnhartsubstanz nach innen gegen den Flansch 66 und den unteren Abschnitt 71 des Retentionsstiftes gedrückt, wodurch eine erhöhte Anlagekraft des Dentins am Stift, eine erhöhte Retentionskraft und ein geringerer Perkulationsspalt erzielt werden. Des weiteren wird durch eine Erhöhung des Druckes eine Verdichtung der Zahnhartsubstanz erzielt; dadurch erfolgt ein leichteres Abscheren an der Sollbruchstelle und es werden tieferwirkende Spannungen in der Substanz vermieden.

Bei der Ausführungsform nach Fig. 20 ist eine spezielle Ausgestaltung eines unteren Schaftes 72 (entsprechend Abschnitt 4 in Fig. 1) dargestellt, der mit Gewindegängen 73 versehen ist und der eine parallel zu den Gewindegängen verlaufende rinnenförmige Vertiefung 74 aufweist, die im unteren Bereich des jeweiligen Gewindeganges angeordnet ist. Diese rinnenförmige Vertiefung 74 dient dazu, daß auf der Mantelfläche des Stiftabschnittes 72 aufgetragenes Glasionomerzement abfließen kann.

Des weiteren ist in Fig. 21 eine abgeänderte Ausführungsform eines unteren Abschnittes 75 des Retentionsstiftes dargestellt, bei der die Gewindegänge 76 im unteren Bereich in einen oder mehrere Gewindegänge 77 mit kleinerem Durchmesser übergehen, so daß ein Gewindegang 77 praktisch zum Vorschneiden des Gewindes beim Eindrehen des Retentionsstiftes in den Zahn dient. Des weiteren kann das unterste Ende 78 des Stiftes 75 rein zylindrisch ausgebildet sein, so daß beim Einführen des Stiftes in das Bohrloch der untere zylindrische Einsatz als Führung dient. Um das Eindrehen eines Retentionsstiftes in die Bohrung eines Zahnes weiter zu verbessern, wird, wie in Fig. 22 dargestellt, im unteren oder in den unteren Gewindegängen am Gewinde eine Schneidkante ausgebildet, die in radialer Richtung verläuft. Vorzugsweise sind zwei Schneidkanten 79, 80 diametral gegenüberliegend ausgebildet. Die äußere Begrenzung der Schneidkante entspricht dabei dem Außendurchmesser des Gewindeganges, die innere Begrenzung ist so gewählt, daß ein Hohlraum 81 zur Aufnahme der Bohrspäne entsteht.

In den Figuren 23 und 24 sind makroskopische Formen für den oberen Abschnitt des Retentionsstiftes schematisch dargestellt. In Fig. 23 ist diese Formgebung in Tannenbaumform ausgebildet, während im Falle der Ausführungsform nach Fig. 24 eine Knopfform 83 dargestellt ist. Beide Formen dienen der Aufnahme von Spannungen im Füllungsaufbau; die auftretenden Spannungen sind durch Pfeile 84, 85 angedeutet.

**Patentansprüche:**

1. Dental-Retentionsstift mit einem in die Zahnhartsubstanz einzusetzenden ersten Abschnitt und einem in den Füllungsaufbau vorstehenden und dessen Retention zum Zahn verstärkenden zweiten Abschnitt, **dadurch gekennzeichnet,** daß der Retentionsstift zur Erhöhung bzw. Verbesserung der Retention mindestens auf seinem zweiten Abschnitt einen ringförmig geschlossenen zylindrischen bzw. becherförmigen Überzug aufweist, der aus mindestens einer mit dem Material des Stiftes und dem Material des Füllungsaufbaues eine chemische oder physikalisch-chemische Verbindung eingehenden, auf den Stift aufgebrachten, mundmilieubeständigen Haftvermittlerschicht besteht.

2. Dental-Retentionsstift nach Anspruch 1, dadurch gekennzeichnet, daß
   a) der Stift zur Erhöhung bzw. Verbesserung der Retention mindestens auf seinem zweiten Abschnitt einen ringförmig geschlossenen zylindrischen bzw. becherförmigen Überzug aufweist, der aus mindestens einer mit dem Material des Stiftes und dem Material des Füllungsaufbaues eine chemische Verbindung eingehenden, auf den Stift aufgebrachten Haftvermittlerschicht besteht,
   b) daß auf die Haftvermittlerschicht eine mit dieser und mit dem nachträglich um den fertigen Stift zu errichtenden Füllungsaufbau eine chemische Verbindung eingehenden, auf die Haftvermittlerschicht aufgebrachten Kunststoffschicht, Glasionomerzementschicht oder weiteren Haftvermittlerschicht (en), die die Verbindung zum Füllungsaufbau verbessert und deren oberste Schicht reaktionsfähige Gruppen besitzt, aufweist, und
   c) daß eine der aufgebrachten Schichten, so ausgebildet ist, daß sie ringförmig auf den Stift aufschrumpft und eine Verspannung mit dem Stift ergibt.

3. Dental-Retentionsstift nach Anspruch 1, dadurch gekennzeichnet, daß die Haftvermittlerschicht eine einzige Schicht aus Porzellan oder entsprechender dentalkeramischer Masse ist.

4. Dental-Retentionsstift nach Anspruch 1, dadurch gekennzeichnet, daß die Haftvermittlerschicht eine Metalloxydschicht ist, die mit dem Metallstift fest verbunden, z.B. aufgebrannt, aufgeglimmt, aufgesputtert, aufgalvanisiert oder dergl. ist oder durch entsprechende Verfahrenstechniken aus dem Stiftmaterial selbst gewonnen ist, z.B. durch Oxydbrand, bzw. daß der Retentionsstift aus einem Metall, z.B. Titan, Zinn, das auf seiner Oberfläche oxidiert, bestehtund daß die Haftvermittlerschicht und die Oxydschicht auf dem Stift so ausgebildet sind, daß eine mundmilieubeständige, chemische Verbindung entsteht.

5. Dental-Retentionsstift nach Anspruch 1, dadurch gekennzeichnet, daß der Retentionsstift aus einem Metall besteht, das hohe Festigkeitseigenschaften besitzt, biokompatibel ist und eine äußere Oxydschicht aus dem gleichen Metall aufweist, und daß auf diesen Stift eine das gleiche oder ein gleichartiges Metall aufweisender Haftvermittler aufgebracht ist, wobei das Metall z.B. Titan, Zinn oder dergl. ist, und wobei die Oberfläche des Stiftes zur verbesserten Ausbildung einer Oxydschicht ringförmig zylindrisch aufgerauht ist.

6. Dental-Retentionsstift nach Anspruch 1, dadurch gekennzeichnet, daß der in die Zahnhartsubstanz einzusetzende erste Abschnitt des Retentionsstiftes, der vorzugsweise auf seiner zylindrischen Oberfläche mit Gewinde oder Gewindegang ähnlicher Struktur versehen ist, eine Metalloxydschicht, z.B. ein Oxyd von Ca, Al oder dergl. Schicht ist, die mit der Glasionomerzementschicht, welche auf der Oberfläche des den Retentionsstift aufnehmenden Bohrloches aufgebracht ist, eine chemische Verbindung eingeht.

7. Dental-Retentionsstift nach einem der Ansprüche 1 - 6, dadurch gekennzeichnet, daß der Retentionsstift ein Metallstift, ein Porzellanstift, ein Keramikstift, z.B. aus gesintertem Aluminiumoxyd, ein Kunststoffstift, z.B. aus Hydroxylpatit oder Trikalziumphosphat, ein Glasfaserstift oder dergl. ist.

8. Dental-Retentionsstift nach Anspruch 4, dadurch gekennzeichnet, daß auf das Metalloxyd ein Porzellan- bzw. Keramikmaterial, z.B. $SiO_2$, $Al_2O_3$ oder ein Oxyd von Ca, K, Na, Br aufgebracht ist, wobei zur Verbesserung der Haftung des Porzellans bzw. der dentalkeramischen Masse Haftvermittlerschichten darunter vorgesehen sind, wie sie in der Zahntechnik bei Verblendkronen bekannt sind.

9. Dental-Retentionsstift nach Anspruch 5, dadurch gekennzeichnet, daß auf das Metalloxyd ein mit dem Metalloxyd reagierender Haftvermittler in Form eines Silan-Haftvermittlers ($SiO_2$), in Form einer Zinnoxydschicht oder dergl. aufgebracht ist, bzw. daß auf den Stift eine Zinnoxydschicht und auf dieser ein Zinn-Haftvermittler und über dem Zinn-Haftvermittler eine Kunststoffschicht aufgebracht ist, wobei die Kunststoffschicht als Opaker ausgebildet ist.

10. Dental-Retentionsstift nach einem der Ansprüche 1 - 9, dadurch gekennzeichnet, daß der Haftvermittler eine Siliziumoxyd-Kohlenstoffschicht $SiO_xC$ ist, die auf dem Metallstift durch chemische Reaktion aufgebracht ist und eine vorzugsweise adhäsive Bindung ergibt, und daß auf die Siliziumoxyd-Kohlenstoffschicht ein Silan-Haftvermittler aufgebracht ist, auf den eine Opakerschicht und/oder eine äußerste, als Kunststoffschicht, Glasionomerzementschicht oder dergl. ausgebildete Schicht aufgebracht ist, wobei Opakerschicht und äußerste Schicht eine einzige Schicht sein können.

11. Dental-Retentionsstift nach einem der Ansprüche 1 - 10, dadurch gekennzeichnet, daß auf eine Siliziumoxyd-Kohlenstoffschicht ($SiO_x$-C-Schicht) eine Silanhaftvermittlerschicht, und darauf eine Füllstoffe enthaltende Schicht aufgebracht ist, wobei die Füllstoffe Ca-, Na-, Al-, Fl-haltige silikatische Gläser sind, die eine chemische Verbindung zum Glasionomerzement des Füllungsmaterials ergeben.

12. Dental-Retentionsstift nach einem der Ansprüche 1 - 11, dadurch gekennzeichnet, daß der Haftvermittler ein Decklack in Form von Lösungen von Aminen, Alkyden oder Resolharzen mit Farbstoffen, in warmhärtender oder kalthärtender Form, zB. $EB_3$-Lack, oder ein Epoxydharz ist, und daß der Haftvermittler und/oder der Opaker ein-oder mehrschichtig aufgebracht sind.

13. Dental-Retentionsstift nach einem der Ansprüche 1 - 12, dadurch gekennzeichnet, daß die äußere Schicht des Überzuges, die die Übergangsschicht für den Füllungsaufbau bildet, ein Kunststoff, z.B. Polyurethan, Polyamid, PMMA-Kunststoff, BIS-GMA-Kunststoff, oder dergl. ist, dessen Eigen-, Bruch-, Zug- und Druckfestigkeit der des Materials des Füllungsaufbaus entspricht, der opak ist oder sein kann, der eine Langzeitreaktionsfähigkeit besitzt, der temperaturunempfindlich ist und/oder der auf den Stift aufschrumpfbar ist, wobei die äußere Schicht zum Füllungsmaterial Seitenketten oder reaktionsfähige Gruppen besitzt, die sich mit freien Ketten bzw. reaktionsfähigen Gruppen des Füllungsaufbaues verbinden.

14. Dental-Retentionsstift nach einem der Ansprüche 1 - 13, dadurch gekennzeichnet, daß auf den Stift diesen zylindrisch umschließend eine Dämpfungsschicht aus Weichmetall, z.B. eine Zinnoxydschicht aufgebracht ist.

15. Dental-Retentionsstift nach einem der Ansprüche 1 - 14, dadurch gekennzeichnet, daß eine der auf den Stift aufgebrachten Schichten, vorzugsweise die äußerste Schicht, die z.B. als Kunststoffschicht ausgebildet ist, Fasern, Füllkörper oder dergl. zur Beeinflussung der Biegefestigkeit und der Druckfestigkeit aufweist.

16. Dental-Retentionsstift nach einem der Ansprüche 1 - 15, dadurch gekennzeichnet, daß der Stift aus unedlem Metall, z.B. Titan, einen Überzug aus einer Schicht aus hochedlem Metall, z.B. Platin, Gold, Silber, darüber eine Schicht aus Zinn von etwa 0,2 - 10 um Dicke, und darauf eine hochedle Schicht, z.B. aus Platin, Gold oder Silber aufweist.

17. Dental-Retentionsstift nach einem der Ansprüche 1 - 16, dadurch gekennzeichnet, daß die äußere Schicht des Stiftes als Schraubkopf für die Aufnahme eines Eindreh- bzw. ein Einschraubwerkzeuges ausgebildet ist, das entweder ein getrenntes Werkzeug oder ein mit dem Schraubkopf fest verbundenes Werkzeug ist, welches am Werkzeugkopf bzw. am Schaft eine Sollbruchstelle, z.B. eine Schlitzstelle aufweist, an der der Werkzeugkopf vom Schaft trennbar ist.

18. Dental-Retentionsstift nach Anspruch 17, dadurch gekennzeichnet, daß der Schaft des Werkzeuges flexibel und schwenkbar bzw. auslenkbar ausgebildet ist.

19. Dental-Retentionsstift-Verbundsystem mit einem aus zwei Abschnitten bestehenden Retentionsstift, dessen erster Abschnitt in die Zahnhartsubstanz eingesetzt wird und dessen zweiter Abschnitt die Retention zum Zahn verstärkt, und mit einer Übergangsschicht zwischen Stift und Füllungsmaterial, dadurch gekennzeichnet, daß die zylindrische Oberfläche des Retentionsstiftes durch Sandstrahlen, durch Elektrolyse oder dergl. aufgerauht ist bzw. mikroretentive Erhebungen und Vertiefungen besitzt, und daß eine Haftvermittlerschicht vorgesehen ist, die vom Zahnarzt auf die aufgerauhte Metallstiftoberfläche vor dem Aufbringen des Füllungsaufbaues auf den zu restaurierenden Zahn aufgetragen wird.

20. Dental-Retentionsstift-Verbundsystem nach Anspruch 19, dadurch gekennzeichnet, daß der Retentionsstift auf seiner zylindrischen, aufgerauhten Oberfläche eine Oxydschicht aufweist, die durch Oxydieren des Metalles des Stiftes bei Luftzutritt selbsttätig gebildet wird und eine Haftvermittlerschicht auf diese Oxydschicht aufgebracht wird, bzw. daß der Retentionsstift auf seiner aufgerauhten zylindrischen Oberfläche mit einer später aufgebrachten Oxydschicht versehen und anschließend eine Haftvermittlerschicht aufgebracht wird.

Fig. 1

Fig. 2

Fig. 3

Fig. 4

Fig. 5

Fig. 6

Fig. 7

25  24
5
A        A
1        3

25
24
3        5

Fig. 8

29  31
32
33
30
34
27
28
26
5
3

Fig. 9

35
36
3        5
37

Fig. 10

3
38
39
2
4

Fig. 11

42  40
44
41
B        B
43
3
2
1
4

Fig. 12

Fig. 13
B-B        44
41
3

41
45
3

Fig. 14

Fig. 15

Fig. 16

Fig. 19

Fig. 17

Fig. 18

Fig. 20

Fig. 21

Fig. 22

Fig. 24

Fig. 23